# FASCICULE DE BREVET EUROPEEN

(11) **EP 0 925 009 B1**
(45) Date de publication et mention de la délivrance du brevet: **22.01.2003**
(21) Numéro de dépôt: 97918231.8
(22) Date de dépôt: 15.04.1997
(51) Int. Cl.: A47G 21/06, A22C 29/04

(54) **PROCEDE ET DISPOSITIF POUR L'OUVERTURE DES HUITRES**
VERFAHREN UND GERÄT ZUM ÖFFNEN VON AUSTERN
PROCESS AND DEVICE FOR OPENING OYSTERS

(30) Priorité: 17.04.1996 FR 9605049
(43) Date de publication de la demande: 30.06.1999
(73) Titulaire: Guilloux, Gabriel, 56760 Penestin (FR)
(72) Inventeur: Guilloux, Gabriel, 56760 Penestin (FR)
(74) Mandataire: Phélip, Bruno
(86) Numéro de dépôt international: FR9700674
(87) Numéro de publication internationale: WO97038613

(56) Documents cités:
- FR-A- 1 194 003
- FR-A- 2 542 597
- US-A- 2 854 688
- US-A- 5 145 448
- PATENT ABSTRACTS OF JAPAN vol. 014, no. 579 (M-1063), 25 Décembre 1990 & JP 02 251392 A (SANYOO KK), 9 Octobre 1990,

## Description

La présente invention concerne un procédé et un dispositif permettant d'ouvrir les coquillages genre huîtres par exemple, facilement et sans aucun risque.

Les huîtres sont des mollusques constitués de deux valves (fond et couvercles articulées autour d'une charnière et reliées par un muscle interne, autour ou sur les côtés duquel se sont développées les chairs comestibles.
La force du muscle interne est importante et l'ouverture des huîtres en vue de leur consommation n'est pas très facile à réaliser.

De façon traditionnelle, cette ouverture est effectuée en faisant pression et levier à l'aide d'un couteau sur la jointure du couvercle pour l'entrouvrir et engager la lame jusqu'au muscle afin de le couper. Une fois le muscle sectionné, le couvercle s'enlève sans effort. Cette opération difficile est un frein redoutable à la consommation ; elle demande des efforts physiques importants et présente le risque pour l'opérateur de se couper.

De nombreux systèmes ou appareillages ont été conçus pour réaliser cette opération d'ouverture de façon moins pénible et plus rapide ; cependant, certaines de ces techniques apparaissent peu efficaces et la complexité des autres en a limité le développement. Un tel appareillage est décrit dans FR-A-1194003.

La présente invention permet de remédier à ces inconvénients ; elle propose un procédé et un dispositif qui assurent l'ouverture des huîtres plus rapidement, sans effort et sans risque de se couper.

Pour une même espèce d'huîtres, le muscle qui retient le couvercle se situe toujours à un même endroit, dans des proportions dimensionnelles de la coquille que l'on peut considérer constantes quelles que soient ses formes et taille. Par exemple, pour les huîtres plates et les huîtres dites «creuses», cette règle se vérifie, mais avec des proportions différentes. Le procédé conforme à l'invention est décrit dans la revendication indépendante 1. Le dispositif pour la mise en oeuvre du procédé est décrit dans la revendication indépendante 3. Selon une caractéristique intéressante, ces moyens adaptés pour trancher le muscle du coquillage consistent en un outil comprenant un manche prolongé par un crochet en forme générale de L. Ce crochet est constitué d'une tige qui s'étend dans le prolongement du manche, et d'un retour à l'équerre ou sensiblement à l'équerre, muni de la partie tranchante. Ainsi, après avoir introduit l'outil dans l'orifice du couvercle, on découpe le muscle par une simple rotation de l'outil, puis on enlève le couvercle par une opération de traction longitudinale sur le manche L'appareil de perçage conforme à l'invention est décrit dans la revendication indépendante 5.

Selon une première forme de réalisation, l'appareil comporte un forêt de perçage et une motorisation montés sur une potence, au-dessus du plan de positionnement du coquillage.

Selon une autre forme de réalisation, cet appareil comporte :
- un boîtier renfermant la motorisation d'entraînement du forêt, à partir du plan horizontal supérieur duquel s'étend en saillie ledit forêt de perçage,
- un plan de positionnement horizontal ou sensiblement horizontal sur lequel peut venir reposer le coquillage sur son couvercle, lequel plan de positionnement est muni d'un orifice de passage du forêt de perçage, et lequel plan de positionnement est disposé parallèlement audit plan horizontal supérieur du boîtier, séparé de ce dernier par un système de ressort pour permettre leur maintien écartés au repos, et pour permettre leur rapprochement en vue du perçage, par une pression manuelle, et
- un dispositif de positionnement graphique ou mécanique qui prend en compte le positionnement du coquillage sur son couvercle.
   De préférence, le plan de positionnement du coquillage est bordé par une jupe périphérique entourant le boîtier qui renferme la motorisation du forêt de perçage. D'autre part, ce plan de positionnement comporte avantageusement une structure de protection qui forme une sorte d'arceau de sécurité au-dessus du forêt de perçage.

Selon une autre particularité de l'invention, l'appareil comporte un contacteur de sécurité actionné par le plan de positionnement du coquillage et adapté pour empêcher le fonctionnement de la motorisation lorsque ledit plan de positionnement est séparé du boîtier.

Selon un premier mode de réalisation, l'appareil comporte un plan de positionnement muni d'un graphique de positionnement du coquillage.
Ce graphique est avantageusement muni de repères représentant les cotes AB et CD de plusieurs tailles d'une même espèce de coquillage, dans les rapports AO/AB et CM/CD connus pour cette même espèce de coquillage, le positionnement du coquillage étant manuel, par extrapolation entre les repères du graphique.

Selon un autre mode de réalisation, l'appareil comporte des moyens mécaniques adaptés pour assurer un positionnement automatique du coquillage par rapport à l'outil de perçage ; ces moyens mécaniques sont constitués d'une première structure de mâchoires assurant le positionnement longitudinal AB du coquillage et d'une seconde structure de mâchoires assurant son positionnement transversal CD.

Cette nouvelle technique d'ouverture des huîtres est très rapide à mettre en oeuvre et ne demande aucun effort particulier à l'opérateur. Elle est d'autre part très sécurisante et elle ne présente quasiment aucun risque de blessure.

D'autre part, si on fait attention à percer le trou dans le couvercle de l'huître exactement sur la zone du muscle, le coquillage ne perd pas son eau, même à l'envers et il reste vivant pour la consommation. Il est ainsi possible de percer le trou dans le couvercle des huîtres, dans la zone du muscle, quelques heures avant le repas, puis de les mettre au réfrigérateur. Juste avant de les servir, on effectue l'opération ultime d'ouverture, qui est très facile et rapide, avec l'outil de découpe et d'enlèvement du couvercle. C'est un réel gain de temps, de fraîcheur, de qualité et de facilité.

Cette dernière opération d'ouverture peut aussi être faite par le consommateur lui-même, à table. Il s'agit d'une opération propre et rapide, de facilité comparable à celle de la dégustation des bigorneaux.

La technique d'ouverture conforme à l'invention présente aussi certains avantages pour les personnes ou les sociétés qui vendent des huîtres ouvertes à emporter (traiteurs, poissonniers ...). Cette nouvelle technique permet de percer les huîtres au moment de la vente; le consommateur les transporte vivantes, avec toute leur eau et il peut les consommer quelques heures après en découpant le muscle et en enlevant le couvercle à l'aide de l'outil de tranchage.

Mais l'invention sera encore illustrée, sans être aucunement limitée, par la description suivante de différents modes de réalisation particuliers, donnés uniquement à titre d'exemples et représentés sur les dessins annexés dans lesquels :
- les figures 1 et 2 montrent les contours de deux formes différentes d'huîtres, vues de dessus, positionnées sur des coordonnées rectangulaires XX'-YY' d'origine O ;
- la figure 3 est une vue en perspective d'une forme de réalisation possible de l'appareil de perçage conforme à l'invention, avec un gabarit de positionnement graphique ;
- la figure 4 est une vue en coupe transversale de l'appareil représenté figure 3 ;
- la figure 5 est une vue de dessus du graphique de positionnement de l'huître qui équipe le plan de positionnement de l'appareil des figures 3 et 4;
- la figure 6 est une vue de côté de l'outil de tranchage du muscle et d'enlèvement du couvercle de l'huître ;
- la figure 7 est une vue de dessus d'une autre forme de réalisation possible de l'appareil de perçage conforme à l'invention, avec un gabarit de positionnement mécanique ;
- les figures 8 et 9 sont des schémas de principe qui illustrent le mouvement des mâchoires de positionnement de l'appareil représenté sur la figure 7 ;
- la figure 10 est une vue en coupe transversale de l'appareil illustré sur la figure 7 ;
- la figure 11 est une vue en coupe longitudinale du même appareil ;
- la figure 12 est une vue de dessus d'un autre mode de réalisation possible d'appareil de perçage ;
- la figure 13 est une vue de l'appareil représenté sur la figure 12, en coupe longitudinale ;
- la figure 14 est une représentation schématique du gabarit de positionnement longitudinal de l'appareil des figures 12 et 13 ;
- la figure 15 est une vue en coupe longitudinale de la tête de perçage qui équipe l'appareil des figures 12 et 13 ;
- la figure 16 est une représentation schématique du gabarit de positionnement transversal de l'appareil des figures 12 et 13 ;
- la figure 17 montre un autre type d'appareil de perçage, vu de dessus ;
- la figure 18 est une vue en coupe transversale de l'appareil illustré sur la figure 17 ;
- la figure 19 est une vue en coupe longitudinale du même appareil ;
- la figure 20 montre encore un autre type d'appareil de perçage en coupe longitudinale ;
- la figure 21 est une vue partielle, en coupe transversale, de l'appareil illustré sur la figure 20.

La technique conforme à la présente invention consiste à percer un orifice dans le couvercle de l'huître, sur le muscle maintenant les deux valves ou dans la zone alentour proche de ce muscle. Ensuite, par exemple à l'aide d'un outil en forme de crochet que l'on introduit dans le trou ainsi percé, on sectionne le muscle et on enlève le couvercle par une simple traction sur l'outil.
Le perçage du couvercle est réalisé en positionnant l'huître sur un appareil muni d'un forêt de perçage et d'un gabarit de positionnement permettant de placer correctement le coquillage pour assurer le perçage à l'endroit désiré.

L'observation de la position du muscle sur des huîtres d'une même espèce montre qu'il se situe toujours au même endroit, dans des proportions dimensionnelles que l'on peut considérer constantes par rapport au contour de sa coquille, quelles que soient sa taille et sa forme.

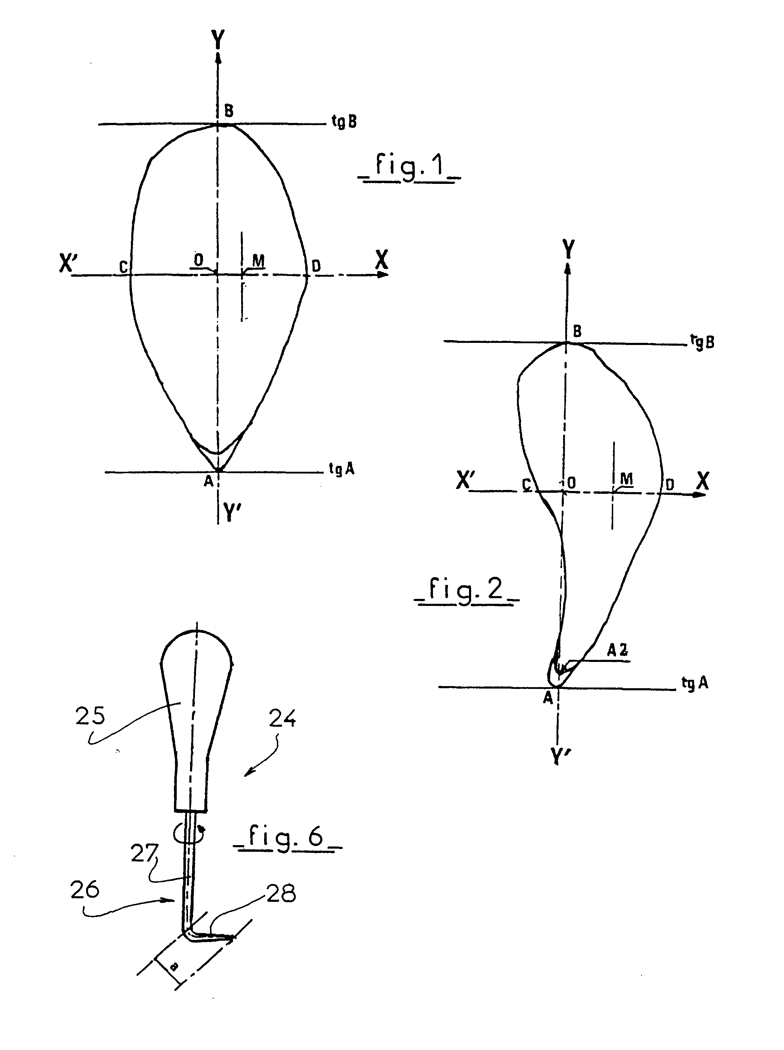

En particulier, il a été observé que le point M correspondant au muscle peut être défini, dans un premier temps, en fonction de la longueur AB de l'huître, le point A correspondant à la charnière des deux valves et le point B correspondant au point d'extrémité opposé. Tel qu'on l'a représenté sur les figures 1 et 2, le point M est situé sur la droite XX' qui est perpendiculaire au segment AB et qui passe par le point O, tel que le rapport AO/AB est connu et constant pour l'espèce d'huîtres en question.
Ensuite, sur la droite XX' passant par le point O, la position M du muscle est fonction de la largeur CD du coquillage. En effet, toujours pour une même espèce d'huîtres, le rapport CM/CD est constant.

Pour chaque espèce d'huîtres, les proportions y = AO/AB et x = CM/MD sont définies au préalable par des mesures sur un échantillonnage après ouverture. Lorsque ces valeurs de proportions sont déterminées, on place l'huître dans un repère de coordonnées rectangulaires XX'-YY' d'origine O et on peut en déduire très simplement la position exacte du point M correspondant au muscle, sur lequel l'opération de perçage doit être réalisée.

Ce point M peut être choisi sur le muscle lui-même qui est relativement gros. Il peut aussi être choisi dans la zone alentour proche du muscle de telle sorte que ce muscle reste accessible à l'outil de tranchage.

Lorsque le point M est choisi sur le muscle lui-même, le forêt de perçage va traverser le couvercle et pénétrer légèrement à l'intérieur dudit muscle qui est moins fragile que les autres organes. L'huître reste bien fermée et vivante ; elle ne perd pas son eau même en la retournant et la consommation peut être différée selon les règles d'hygiène en vigueur.

Lorsque le point M est choisi dans la zone alentour du muscle, on doit alors prendre davantage de précautions. Lors du perçage, le forêt traverse le couvercle et peut atteindre les organes fragiles autour du muscle. L'outil de tranchage introduit par l'orifice du couvercle doit décrire des arcs de cercle uniquement en direction du muscle sous peine de risquer d'abîmer les chairs plus éloignées.

Le muscle qui retient les deux valves de l'huître est relativement gros ; M étant un point de ce muscle, cela confère une marge intéressante des possibilités de perçage. Cette marge d'erreur est au bénéfice des rapports AO/AB et CM/CD qui peuvent être considérés comme constants malgré les légères différences anatomiques envisageables d'une huître sur l'autre.

L'appareil de perçage du trou dans le couvercle de l'huître comporte un gabarit graphique ou mécanique qui prend en compte les points A, B, C et D de l'huître pour les placer dans des coordonnées rectangulaires XX'-YY' d'origine O et obtenir un positionnement correct du muscle du coquillage en regard de l'outil de perçage. Pour toutes les tailles d'une même espèce d'huîtres, les repères du graphique ou les mouvements des mécanismes reproduisent dans leurs proportions respectives sur YY' l'ensemble des points A, B par rapport à O, et sur XX' l'ensemble des points C, D par rapport à M.

Dans l'appareil de perçage, soit le forêt avec son mécanisme de perçage, et/ou l'huître avec ses mécanismes de positionnement (graphique ou mécanique) sont mobiles pour aligner l'axe du forêt avec le point M défini sur l'huître.

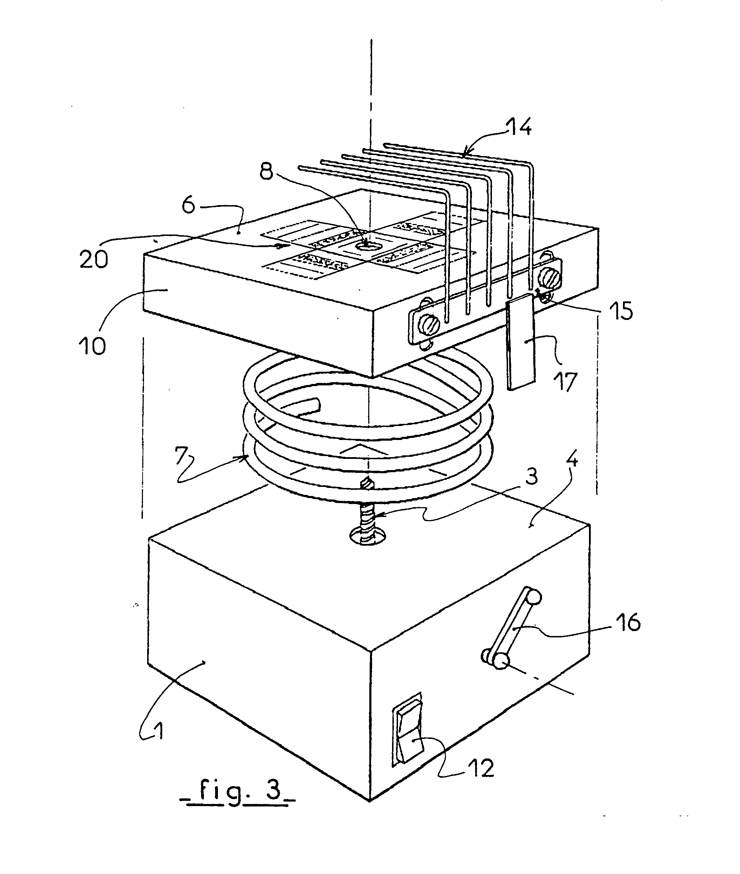

On a représenté sur les figures 3 à 5 un premier mode de réalisation de cet appareil de perçage, muni d'un gabarit de positionnement graphique.

Cet appareil est constitué d'un boîtier 1 dans lequel est fixé un moteur 2 dont l'arbre entraîne un forêt 3 qui traverse le plan supérieur 4 dudit boîtier 1. Le forêt 3 est lié mécaniquement à l'arbre du moteur 2. Plusieurs longueurs de forêts sont adaptables selon la taille des huîtres 5.

Le plan de positionnement 6 de l'huître 5 est indépendant et séparé du plan supérieur 4 du boîtier 1 par un système de ressort 7, par exemple un ressort spirale centré sur le forêt 3. Le plan de positionnement 6 est parallèle au plan supérieur 4 du boîtier 1 et il est mobile par rapport à celui-ci par une pression manuelle. Cette pression comprime le ressort 7 et le forêt a la possibilité de traverser le plan de positionnement 6 par l'intermédiaire d'un orifice 8 aménagé à cet effet, en vis-à-vis. Lorsque la pression est relâchée, le ressort 7 fait remonter le plan 6 qui revient à sa position initiale, au-dessus du forêt 3.

Le plan de positionnement 6 est équipé d'une jupe périphérique 10 qui ceinture le boîtier 1 et qui guide son mouvement parallèle par rapport au dessus dudit boîtier 1.

Le moteur 2, par exemple un moteur électrique, est fixé à l'intérieur du boîtier 1 par tout moyen approprié. Il est actionné par un bouton marche/arrêt 12.

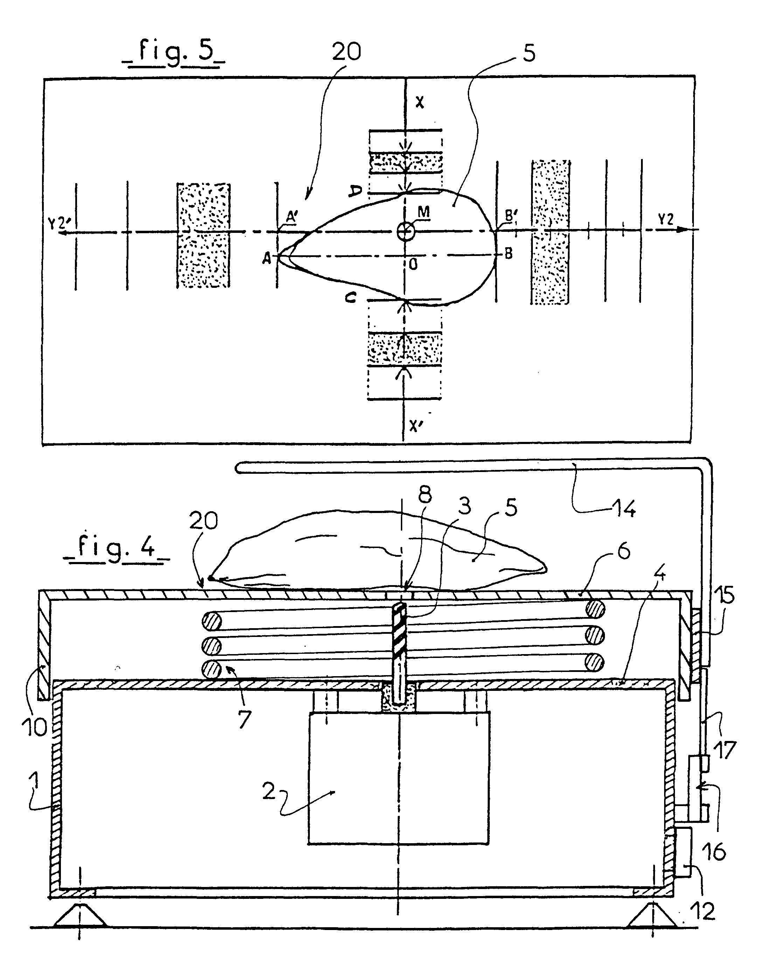

Sur les figures 3 et 4, on remarque la présence d'une structure de protection 14 qui vient partiellement recouvrir le plan de positionnement 6, au droit de l'orifice 8 par lequel passe le forêt 3. Cette structure de protection 14 est en forme de grille en L fixée sur un support 15 solidaire de la jupe périphérique 10 du plan de positionnement 6. Le support 15 est fixé sur la jupe 10 de façon réglable au moyen de lumières oblongues pour permettre son réglage en hauteur.

L'appareil comporte également un contacteur de sécurité 16, du type à bascule, qui est adapté pour empêcher le fonctionnement de la motorisation 2 lorsque le plan de positionnement 6 est séparé du boîtier 1. Le contacteur 16 est directement relié à la motorisation 2 et il est actionné par une patte 17 solidaire du support 15. De la sorte, pour que la motorisation 2 puisse fonctionner, le plan de positionnement 6 doit venir chapeauter le boîtier 1 et la structure de protection 14 ne doit pas avoir été enlevée.

La surface supérieure du plan de positionnement 6 est équipée d'un graphique 20, représenté sur la figure 5, qui correspond à l'espèce d'huîtres à ouvrir. Ce graphique indique le positionnement longitudinal AB et transversal CD avec de nombreux repères AB et CD pour différentes tailles d'huîtres d'une même espèce représentés sur des coordonnées rectangulaires d'origine M. Le positionnement est manuel par extrapolation entre les repères du graphique qui sont dans les rapports x = CM/CD et y = AO/OB connus pour une même espèce d'huîtres. Ces repères correspondent à des lignes de tangence sur lesquelles doivent être positionnés, dans un premier temps, les points AB de la longueur de l'huître, puis ensuite les points CD de sa largeur afin de placer son muscle sur le point M axé sur le forêt 3. Les repères du graphique 20 sont adaptés pour un positionnement de l'huître à l'envers, côté couvercle sur le plan de réception 6.

Après mise en marche du moteur 2, l'opération de perçage s'effectue en posant l'huître 5 à l'envers, côté couvercle, sur le plan de positionnement 6. L'huître est déplacée sur les graduations du graphique 20 jusqu'à ce qu'elle soit positionnée correctement par extrapolation entre les repères du graphique et on exerce ensuite une pression perpendiculaire au plan de positionnement 6, en maintenant bien le coquillage pour assurer le perçage. Le plan 6 se rapproche du boîtier en comprimant le ressort 7 ; le forêt 3 passe par l'orifice 8 et il perce perpendiculairement le couvercle de l'huître 5.

Un film protecteur, de qualité alimentaire pourra avantageusement être placé sur le ressort spirale 7 et autour de ce dernier pour réceptionner et isoler les éventuels éclats susceptibles de passer par l'orifice 8.

Le même appareil peut percer différentes espèces d'huîtres. Il suffit de changer le gabarit graphique 20 fixé par tout moyen approprié sur le plan de positionnement 6. Plusieurs graphiques pourront être proposés suivant les différentes espèces d'huîtres. L'appareil de perçage illustré sur les figures 3 à 5 est de conception simple et il assure une rapidité de percement dans le couvercle de l'huître. D'autre part, pendant la manoeuvre, l'huître est maintenue par les deux mains de l'opérateur et elle est très stable sur son plan de positionnement.
Les nombreux essais effectués ont montré qu'une huître percée sur son muscle et mise à l'envers ne perd pas son eau. Il n'y a donc aucun problème pour percer le coquillage dans toutes les positions.

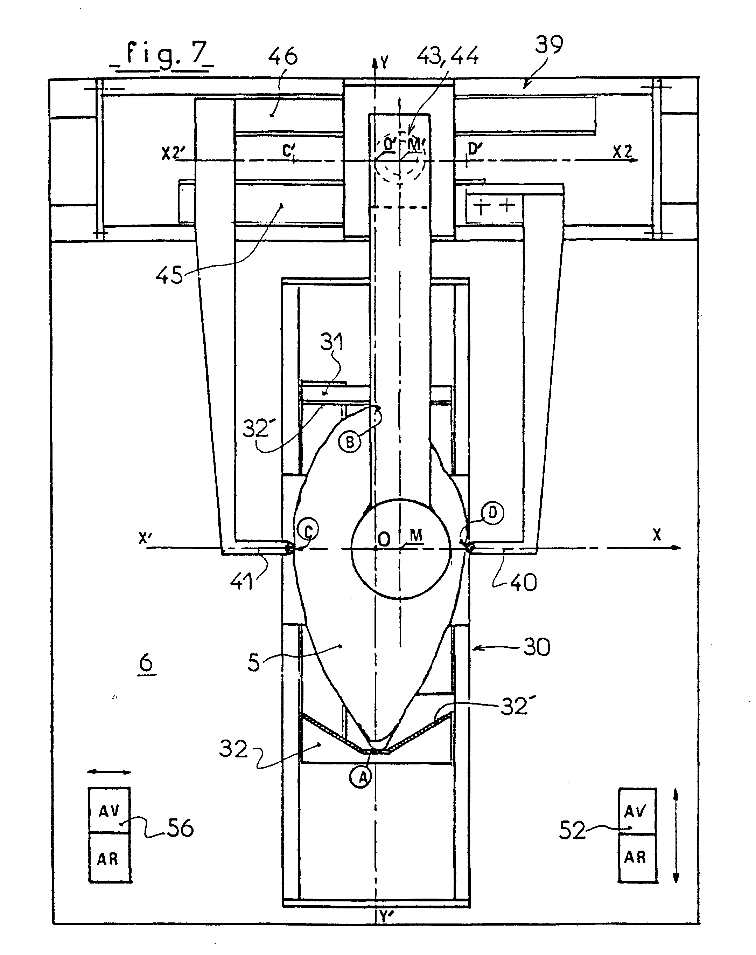

Une fois le trou réalisé dans le couvercle de l'huître, on utilise avantageusement l'outil illustré sur la figure 6 pour assurer le tranchage du muscle et pour enlever le couvercle. Cet outil 24 est constitué d'un manche 25 prolongé par un crochet 26 en forme générale de L. Le crochet 26 est lui-même constitué d'une tige 27 placée dans l'axe du manche 25 et d'un retour 28 à l'équerre ou sensiblement à l'équerre, d'une longueur a adaptée à la grosseur de l'huître. Le retour 28 est en forme de lame tranchante dans un plan perpendiculaire à l'axe de la tige 27 ; la liaison à l'équerre ou sensiblement à l'équerre qui relie cette partie tranchante 28 à la tige 27 peut être légèrement arrondie pour faciliter l'introduction dans le trou du couvercle.
Après avoir introduit la partie tranchante 28 à l'intérieur de l'huître, le tranchage du muscle est réalisé par une manoeuvre circulaire de l'outil 24. Une fois le muscle complètement sectionné, il suffit de tirer sur l'outil pour enlever le couvercle sans aucune difficulté grâce au retour 28 qui forme levier.
Les dimensions de l'outil 24 sont adaptées selon la taille des huîtres à ouvrir.

De préférence, au cours de l'opération de tranchage, la partie tranchante 28 doit être maintenue en contact contre la face intérieure du couvercle ; cela permet d'obtenir une découpe précise et une présentation correcte de l'huître.

Bien entendu, la section de l'outil qui pénètre dans l'huître doit être inférieure au diamètre du trou percé pour avoir une aisance de mouvement. C'est le diamètre du trou qui détermine l'outil parce que le forêt 3 doit être de petit diamètre et tourner relativement vite pour dégager efficacement les fins copeaux de coquille vers l'extérieur. Un forêt trop gros risquerait de provoquer des éclats à l'intérieur de l'huître.
D'autre part, l'outil coupant 28 doit être de bonne qualité et d'une longueur permettant de couper le muscle quelle que soit sa position et selon les marges d'erreurs tolérées.
La marge d'erreur et le risque de percer trop en-dehors de la zone du muscle sont faibles. Cela peut cependant arriver dans le cas d'une malformation importante de l'huître qui est surtout constatée sur les coquillages de forme très allongée. Dans ce cas, pour obtenir un perçage correct dans la zone du muscle, il faut équilibrer l'excès de longueur du talon au niveau de la charnière de l'huître. Si cette compensation n'a pas été réalisée lors du perçage, on peut utiliser un outil de tranchage plus long pour aller chercher le muscle. On évitera cependant alors une trop grande rotation de l'outil pour ne pas abîmer la chair de l'huître à proximité du muscle.

Les figures 7 à 11 montrent un autre type d'appareil de perçage conforme à la présente invention, muni d'un gabarit de positionnement mécanique. Cet appareil comporte en fait deux mécanismes de positionnement, l'un longitudinal suivant un axe YY', et l'autre transversal suivant l'axe XX'.

Comme les mécanismes de positionnement transversal et longitudinal ne peuvent pas se superposer, l'un d'eux doit être déporté sur un axe parallèle (X2X'2 (X2X2') dans le cas présent) hors du champ de mouvements de l'autre.

Le mécanisme de positionnement longitudinal 30 est équipé de deux mâchoires 31 et 32 qui se déplacent en sens inverse par rapport au point O, dans un rapport de mouvement y = AO/AB. La mâchoire 32 a une forme en Vé pour recevoir le talon de l'huître ; elle se déplace en ordonnées dans la proportion de OA. La mâchoire 31 serre l'huître à son autre extrémité et elle se déplace en ordonnées dans la proportion de OB.

Les mâchoires 31 et 32 sont recouvertes d'un revêtement caoutchouc à aiguilles 32', pour faciliter le serrage, ne pas casser l'huître et éviter tout risque de glissement lors du perçage.

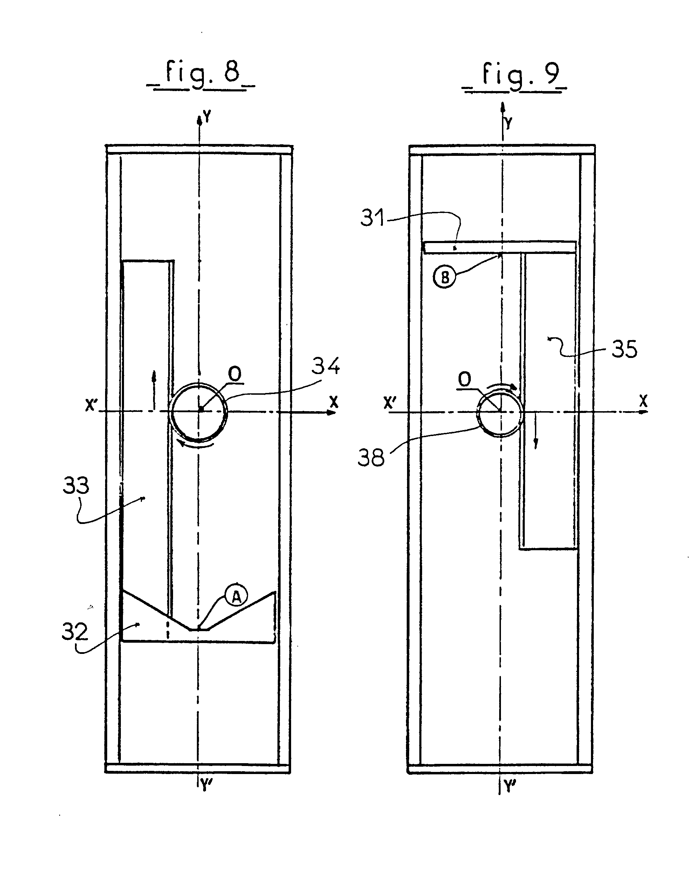

La figure 8 montre le mouvement de la mâchoire 32 qui est lié au déplacement de la crémaillère 33 sur laquelle elle est fixée. Ce déplacement est provoqué par l'engrenage 34 d'axe O. La figure 9 montre le mouvement de la mâchoire 31 qui est lié au déplacement de la crémaillère 35 sur laquelle elle est fixée. Ce déplacement est provoqué par l'engrenage 38 d'axe O. Pour une même valeur de rotation, l'engrenage 34 développe AO et l'engrenage 38 développe OB.

Les deux engrenages 34 et 38 sont solidaires l'un de l'autre et liés sur le même arbre d'axe O. Leurs crémaillères 33 et 35 parallèles et opposées par rapport à O ont des mouvements inverses et proportionnels au diamètre des engrenages.

Le mécanisme de positionnement transversal 39 fonctionne selon le même principe, au moyen des deux mâchoires 40 et 41. Les deux mécanismes de positionnement longitudinal 30 et transversal 39 ne pouvant pas se superposer, le mécanisme transversal 39 est déporté sur l'axe X2X'2.

Le point M est la position du perçage entre C et D sur XX' dans le rapport x = CM/CD. Sur l'axe parallèle X2'X2, ces points sont identiques et deviennent M', C' et D', dans le même rapport de mouvement x = CM/CD ou x = C'M'/C'D'.

M' est l'axe du mécanisme 39 sur lequel les engrenages 43 et 44 déplacent en sens inverse les crémaillères 45 et 46 auxquelles sont liées les mâchoires 40 et 41. Les deux engrenages 43 et 44 sont liés entre eux sur l'arbre d'axe M'. Leurs crémaillères 45 et 46 sont opposées par rapport à M' pour obtenir des mouvements en sens inverse et proportionnels au diamètre des engrenages. L'engrenage 43 développe CM et l'engrenage 44 développe MD pour une même valeur de rotation.

Le mécanisme d'axe M' étant mobile sur X2X2' par rapport au bâti de l'appareil, le mécanisme 39 est monté sur un assemblage coulissant 48 de section polygonale.

Le positionnement longitudinal est réalisé par le moteur 49 qui entraîne l'arbre 50 sur lequel sont montés les engrenages 34 et 38. La commande de fonctionnement est réalisé par le bouton avant/arrière 52.

Le positionnement transversal est réalisé par le moteur 54 qui entraîne l'arbre 55 sur lequel sont montés les engrenages 43 et 44. La commande est réalisée par le bouton avantlarrière 56.

Une fois les positionnements longitudinal et transversal terminés, le point M correspondant au muscle de l'huître se situe au droit du forêt 57 qui équipe la tête de perçage 58.

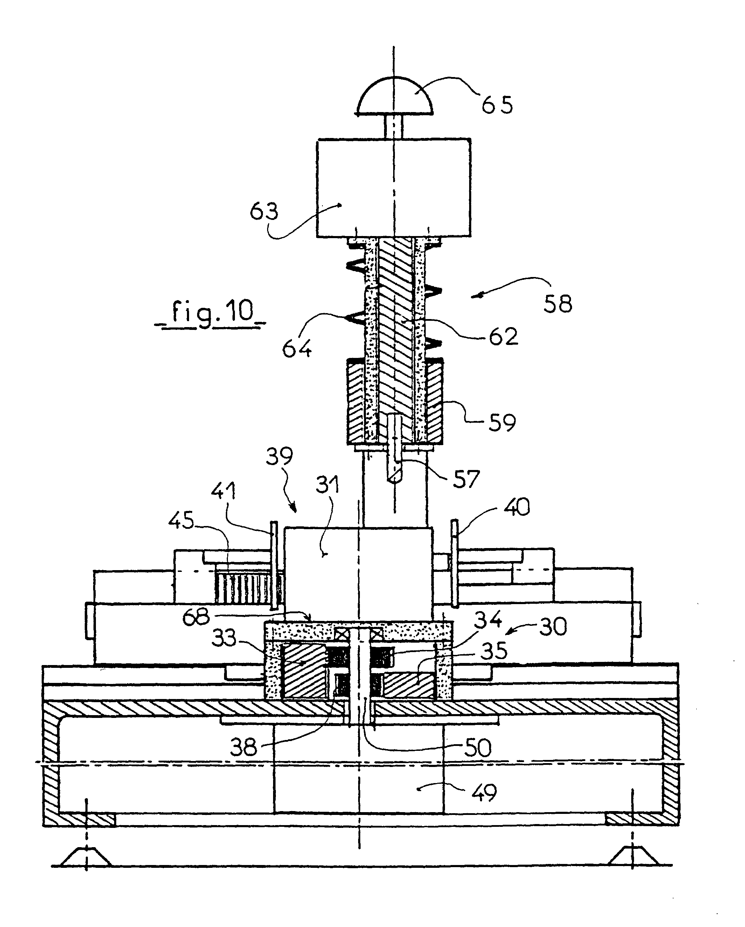

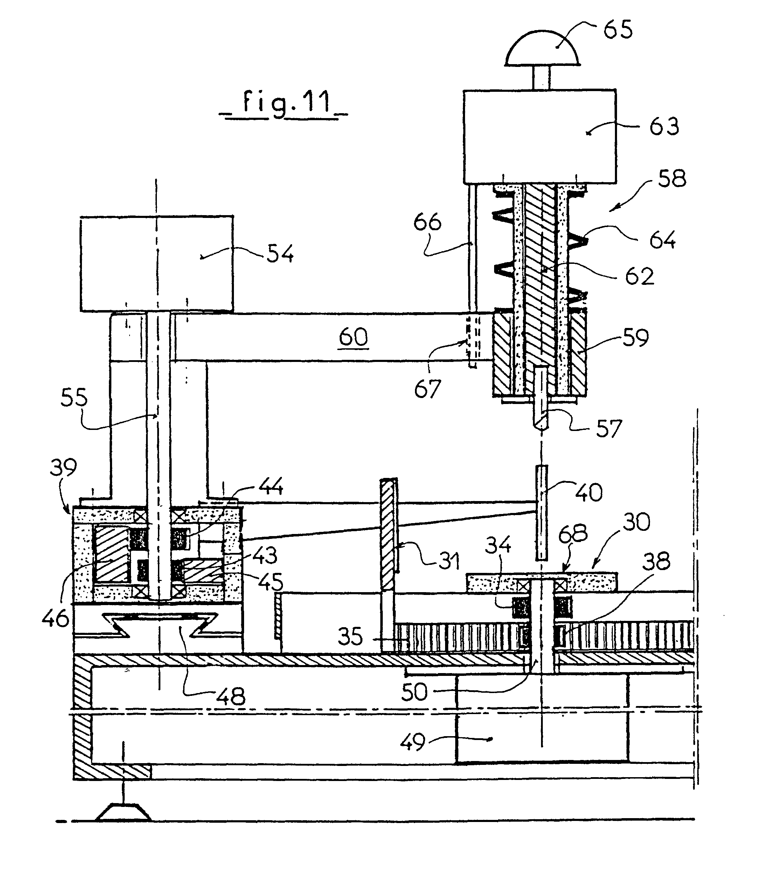

Cette tête de perçage 58, visible sur les figures 10 et 11, est montée sur un support 59 en forme de bague, qui est lié au mécanisme de positionnement transversal 39 par une potence 60. L'arbre 62 qui porte le forêt 57 coulisse dans la bague support 59. La motorisation 63 est posée sur le support 59 par l'intermédiaire d'un ressort spirale 64 ; elle est commandée par un bouton de manoeuvre supérieur 65. Pour empêcher une rotation de la tête 58, on prévoit une tige de guidage longitudinal 66 qui est solidaire du moteur 63 et qui vient s'engager dans un orifice 67 aménagé sur la potence 60.

L'huître est posée couvercle vers le haut sur un support 68, entre les mâchoires 31, 32, 4 et 41, qui fait office de plan de positionnement. Le perçage de son couvercle s'effectue en appuyant sur le bouton de manoeuvre 65. Le moteur 63 se met en marche, le forêt 57 descend vers l'huître sous la pression exercée à l'encontre du ressort 64. Après le perçage, on relâche la pression sur le bouton 65 ; le moteur s'arrête et la tête 58 remonte seule sous l'action du ressort 64.

L'ouverture de l'huître s'effectue par exemple avec l'outil 24 de la figure 6, comme expliqué ci-avant.
A noter qu'un appareil de perçage intermédiaire entre celui illustré sur les figures 3 à 5 et celui illustré sur les figures 7 à 11, pourrait consister à remplacer les moyens mécaniques de positionnement 30 et 39 de ce dernier mode de réalisation, par un simple graphique de positionnement manuel.

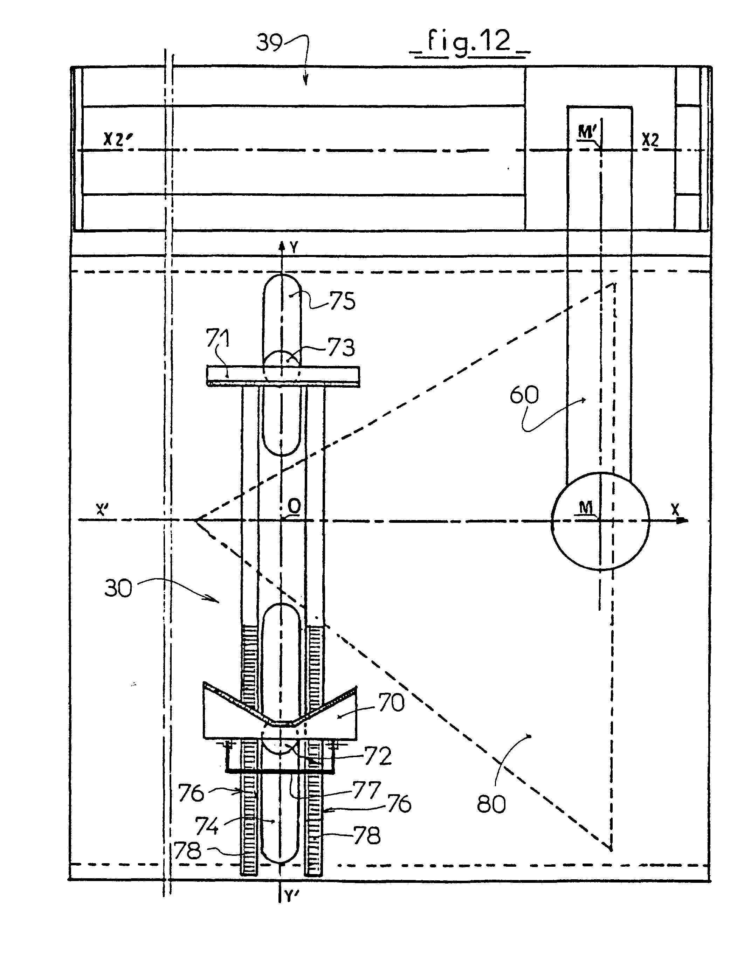

Un autre mode de réalisation d'appareil de perçage est illustré sur les figures 12 à 16, muni de deux mécanismes simplifiés de positionnement.

La conception de cet appareil étant voisine de celle de l'appareil illustré sur les figures 7 à 11, les éléments communs conserveront les mêmes repères pour simplifier la description.

Sur cet appareillage, le positionnement longitudinal de l'huître se fait par un mécanisme dont les mouvements suivent un axe YY' et le positionnement transversal par un mécanisme dont les mouvements suivent un axe XX', déporté sur un axe parallèle X2X2'.

Les mouvements du mécanisme placé sur YY' se font par rapport à un axe O et dans un rapport y = AO/AB.
Les mouvements du mécanisme placé sur XX' se font par rapport à un axe M, dans un rapport x = CM/CD. Le point M est mobile sur XX', donc mobile par rapport à l'origine O et aussi parrapport au bâti de l'appareil.

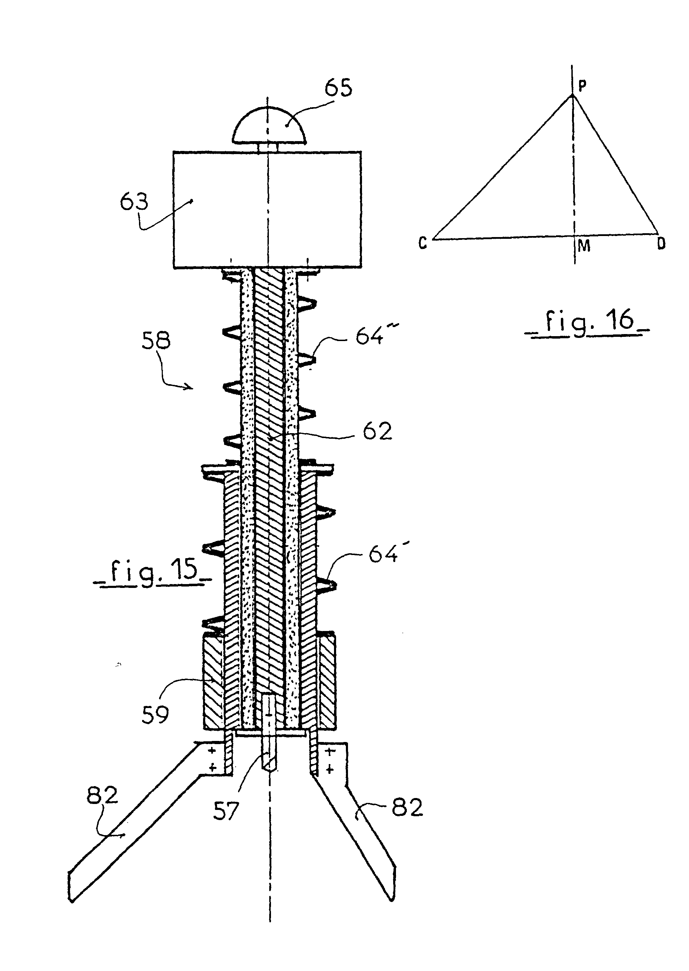

La tête de perçage 58, illustrée sur la figure 15 a une structure similaire à celle décrite en relation avec les figures 10 et 11 précédentes. L'axe du forêt 57 est disposé à la verticale du point M correspondant au muscle de l'huître lorsque le positionnement de cette dernière est terminé.

La figure 12 représente l'appareil en vue de dessus.

Le positionnement longitudinal de l'huître est obtenu au moyen d'un étau à deux mâchoires 70 et 71 montées respectivement sur des axes 72 et 73 qui coulissent librement dans des rainures 74 et 75. La mâchoire 70 coulisse sur deux guides latéraux 76 qui sont solidaires de la mâchoire 71. Le positionnement de la mâchoire 70 sur les guides 76 est réalisé par un mécanisme du genre cliquet constitué d'une barre transversale 77 qui vient s'accrocher sur un crantage 78 aménagé sur la partie supérieure des guides 76.
Après avoir positionné l'huître entre les mâchoires 70 et 71 sur le plan de positionnement formé par les deux guides 76, on effectue un serrage manuel desdites mâchoires et on bloque leur positionnement au moyen du verrou 77. Le serrage est facilité par le revêtement en caoutchouc à aiguilles des mâchoires. L'élasticité de ce revêtement empêche l'huître de déraper ou de se casser.

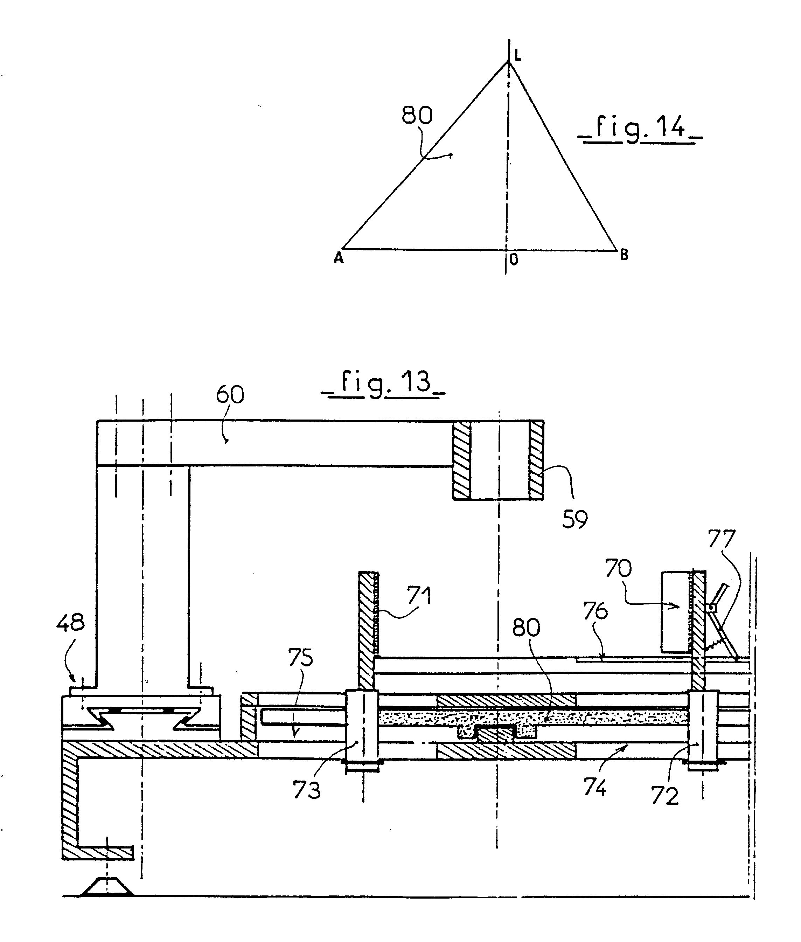

Le positionnement de l'huître sur l'axe YY' est obtenu au moyen d'une plaque triangulaire 80 en forme de gabarit, représentée de façon isolée sur la figure 14. Sur cette figure, LO correspond à la hauteur du triangle et AB est la plus grande longueur de l'espèce d'huître, dans le rapport y = AO/AB. Toutes les perpendiculaires de LO coupent les côtés du triangle dans le rapport y = AO/OB.

Le triangle de positionnement 80 est guidé sur le bâti de l'appareil pour coopérer avec les axes 72 et 73 des mâchoires 70 et 71. Ces deux axes 72 et 73 sont libres en translation dans leur rainure respective 74 et 75. Lorsque les côtés du triangle 80 viennent en contact avec lesdits axes 72 et 73, l'huître positionnée sur les mâchoires 70 et 71 se déplace sur l'axe YY'. Son positionnement est terminé lorsque les deux côtés du triangle sont en pression sur les axes 72 et 73. Le point M correspondant au muscle de l'huître est alors correctement positionné sur l'axe XX'. Le triangle de positionnement 80 forme un gabarit à action indirecte.

La tête de perçage 58 est guidée sur l'axe XX' par l'intermédiaire de la potence 60 montée sur l'assemblage coulissant 48.

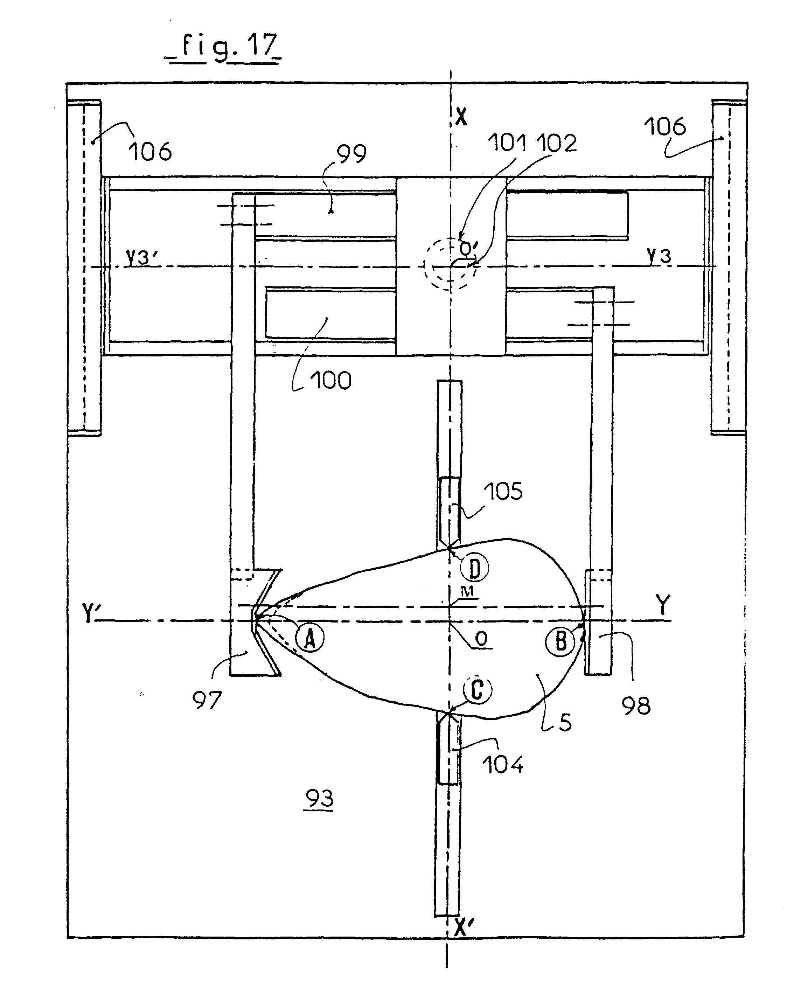

Tel qu'on l'a représenté sur la figure 15, la tête de perçage 58 comporte une fourche de centrage 82 qui forme un gabarit triangulaire de positionnement schématisé sur la figure 16. Sur cette figure, PM est la hauteur du triangle et toutes les perpendiculaires à cette droite PM respectent le rapport x = CM/CD. Il s'agit d'un gabarit du même principe que la plaque triangulaire 80 mais dont l'action est directe sur le coquillage. La hauteur PM du triangle 82 correspond à l'axe du forêt 57 ; lorsque la fourche 82 est en appui contre les points C et D de l'huître, l'axe du forêt 57 se trouve à la verticale de l'huître, sur le point M correspondant à son muscle.

Dans un premier temps, on positionne grossièrement la tête de perçage 58 au-dessus de l'huître positionnée correctement sur l'axe YY'. Lorsque l'on appuie sur le bouton de manoeuvre 65, le moteur 63 se déclenche et la pression vers le bas comprime le système de ressort 64. La fourche 82 descend jusqu'à se bloquer contre les points C et D de l'huître. Le contact de la fourche 82 avec l'huître affine le positionnement du forêt 57 sur l'axe XX' par déplacement de la potence 60 sur l'axe X2X2'. Lorsque l'ensemble est correctement positionné, il suffit d'exercer une pression plus importante sur le bouton de manoeuvre 65 pour percer le couvercle de l'huître.
Selon une particularité intéressante, on prévoit deux ressorts 64' et 64" entre le moteur 63 et le support 59, tarés différemment. Le premier ressort 64', très souple, est actif au début du mouvement, il assure le réglage du positionnement sur l'axe XX'. Le second ressort 64" nécessite un appui plus ferme sur le bouton 65 pour assurer sa compression ; il est actif pour l'opération de percement proprement dite.

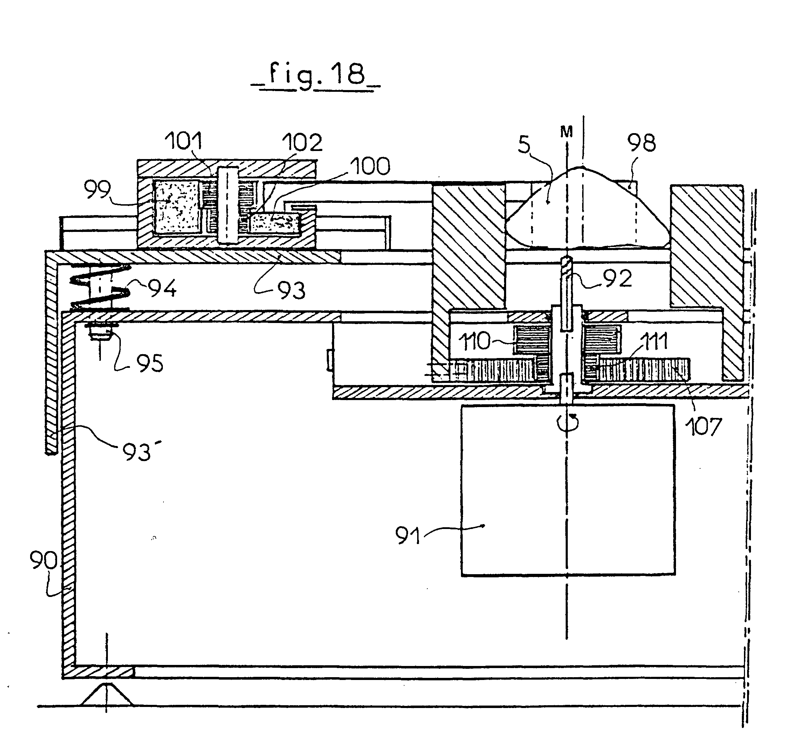

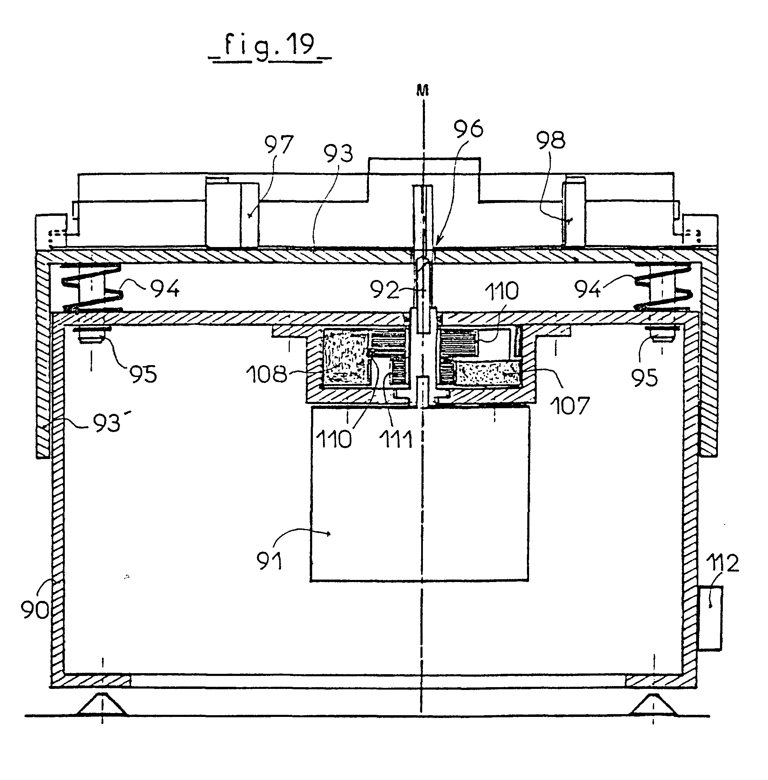

Un autre mode de réalisation possible d'appareil de perçage est illustré sur les figures 17 à 19. Ce mode de réalisation prévoit des dispositifs mécaniques de positionnement longitudinal et transversal de l'huître et un système de perçage de l'huître à travers son plan de positionnement.

Cet appareil est voisin de celui illustré sur les figures 3 à 5 mais le système de positionnement graphique est remplacé par des moyens de positionnement mécaniques.

Sur cet appareil, le boîtier 90 renferme le moteur 91 qui entraîne en rotation le forêt 92.
Un plan de positionnement 93 est mobile au-dessus du boîtier 90, séparé de ce dernier par des ressorts 94 montés sur des axes 95. Le plan de positionnement 93 comporte une jupe périphérique 93' qui vient ceinturer le boîtier 90 et un orifice 96 pour le passage du forêt 92.

Les axes 95 sont solidaires du plan 93 et ils coulissent sur la face supérieure du boîtier 90 dans des orifices adaptés.

Cet appareil est équipé de deux mécanismes de positionnement, l'un pour le positionnement longitudinal AOB, solidaire du plan 93 et l'autre pour le positionnement transversal CMD, solidaire du boîtier 90.

Le positionnement longitudinal de l'huître est réalisé par un système de mâchoires 97 et 98 similaire à celui décrit sur l'appareil des figures 7 à 11. Les deux mâchoires 97 et 98 sont portées par des crémaillères respectivement 99 et 100 qui coopèrent avec des engrenages respectivement 101 et 102 d'axe O'. Les deux engrenages 101 et 102 sont liés l'un par rapport à l'autre. Leurs crémaillères opposées par rapport à O' provoquent des mouvements inverses et proportionnels au diamètre des engrenages selon le rapport y = AO/AB.

Le positionnement des deux mâchoires 97 et 98 contre les extrémités de l'huître est réalisé manuellement.

Le positionnement transversal sur l'axe XX' est réalisé selon un principe identique, par l'intermédiaire de deux mâchoires 104 et 105 commandées par un mécanisme intégré dans le boîtier 90.

Les mâchoires 104 et 105 viennent serrer l'huître sur les points C et D et elles se déplacent dans un rapport x = CM/CD. Pour permettre le positionnement des mâchoires 104 et 105, le mécanisme de positionnement longitudinal qui porte les mâchoires 97 et 98 se déplace sur l'axe XX' par l'intermédiaire de deux guides latéraux 106.

Les mâchoires 104 et 105 sont solidaires de crémaillères, respectivement 107 et 108 commandées par des engrenages 110 et 111. Les engrenages 110 et 111 sont liés et ils tournent librement sur l'arbre qui porte le forêt 92. Les crémaillères 107 et 108 entraînent les mâchoires 104 et 105 selon un mouvement inverse et proportionnel au diamètre des engrenages, selon le rapport x = CM/CD.

Le moteur 91 est mis en marche par l'intermédiaire du bouton de commande 112. Après avoir posé l'huître à l'envers sur le plan 93, on la serre manuellement entre les mâchoires 97 ,98 d'une part et 104, 105 d'autre part. On appuie ensuite sur le plan de positionnement 93 qui descend sur ses axes 95 dans la limite de compression des ressorts 94. Le forêt 92 perce le couvercle de l'huître ; on relâche la pression et le plan 93 remonte automatiquement.

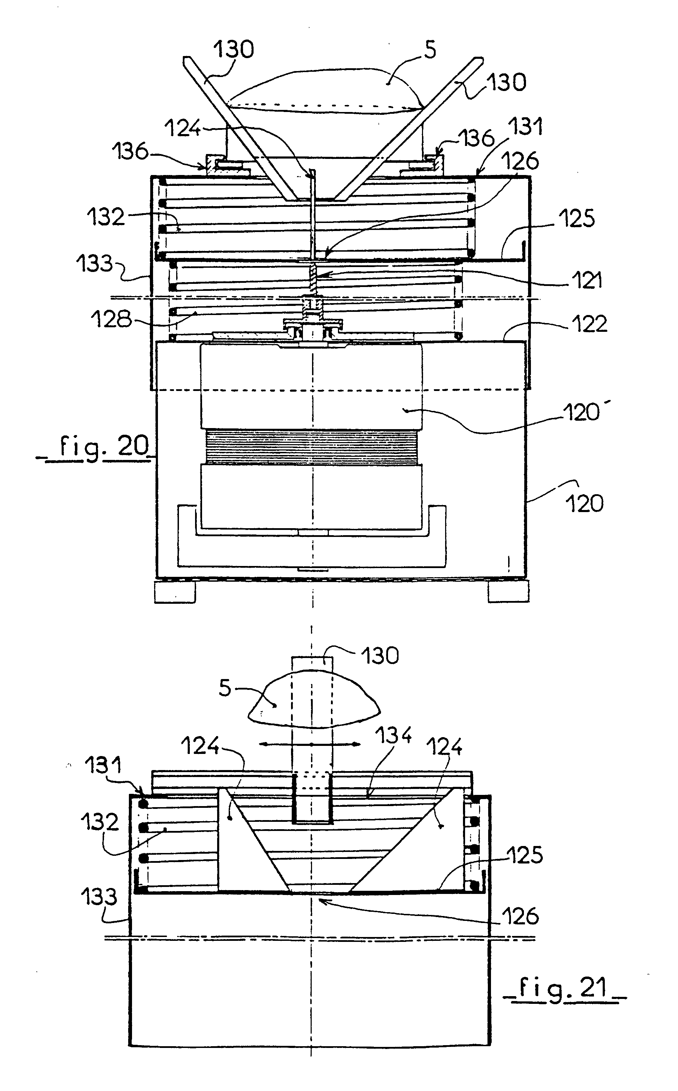

Les figures 20 et 21 montrent encore un autre mode de réalisation possible de l'appareil de perçage. Ce mode de réalisation a une structure voisine de celui illustré sur les figures 17 à 19, mais on prévoit des dispositifs mécaniques de positionnement longitudinal et transversal en forme de gabarits à action directe conformes au principe illustré sur la figure 15.
Ce dernier mode de réalisation présente l'intérêt d'être très simple à réaliser; il permet d'envisager une automatisation de l'ouverture des huîtres.

La figure 20 est une coupe longitudinale complète de l'appareil alors que la figure 21 est une coupe transversale partielle détaillant simplement sa partie supérieure.
Tel que représenté sur les figures 20 et 21, cet appareil est constitué d'un boîtier 120 renfermant la motorisation 120' du forêt 121 qui s'étend en saillie à partir de son plan supérieur horizontal 122. Au-dessus du plan horizontal 122, on remarque la présence du gabarit de positionnement transversal en forme de fourche verticale 124 solidaire du plan de réception 125. Le plan de réception 125 comporte un orifice central 126 pour le passage du forêt 121 ; il est séparé du plan supérieur 122 du boîtier par l'intermédiaire d'un ressort spirale 128.

Le gabarit de positionnement longitudinal s'étend perpendiculairement au gabarit transversal ; il se présente sous la forme d'une fourche verticale 130 solidaire d'un plan de réception 131 posé sur le plan de réception 125 par l'intermédiaire d'un ressort spirale 132. Le plan de réception 131 comporte une jupe périphérique 133 qui s'étend vers le bas sous le niveau supérieur du boîtier 120.

D'autre part, le plan de réception 131 comporte une lumière longitudinale 134 pour le passage du gabarit transversal 124 et du forêt 121.

Le gabarit longitudinal 130 est mobile sur son support 131, guidé dans le sens de positionnement du gabarit transversal 124, par exemple au moyen d'un système coulissant rail/coulisseau 136.

En outre, pour assurer un fonctionnement correct de l'ensemble la résistance à la compression du ressort 132 est inférieure à celle du ressort 128 ; le ressort 132 peut être taré à 2 kg et le ressort 128 taré à 4 kg, par exemple.

Lorsque l'on positionne une huître 5, côté couvercle sur le gabarit triangulaire 130, son muscle vient automatiquement se positionner sur une ligne horizontale passant par le plan vertical du forêt 121 (l'inclinaison des deux bras de la fourche est adaptée en conséquence selon les principes décrits précédemment). Une pression vers le bas sur l'huître assure la compression du ressort 132 et l'huître vient en contact avec le gabarit transversal 124. Le gabarit 130 avec l'huître se déplace sur son système de guidage 136 de telle sorte que les deux côtés latéraux de l'huître entrent en contact avec les deux bras de la fourche 124. L'huître est alors convenablement positionnée par rapport au forêt 121 et il suffit d'appuyer un peu plus fortement pour comprimer le ressort 128 et percer le couvercle sur le muscle.
Dans ce mode de réalisation, on peut considérer que le plan de positionnement de l'huître est constitué par les deux gabarits 124 et 130 associés à leur plan de réception respectif 125 et 131.

Pour les deux derniers modes de réalisation des figures 17 à 19 et 20, 21, on peut prévoir des systèmes de sécurité identiques à ceux prévus sur l'appareillage des figures 3 à 5 (arceau de sécurité et contacteur à bascule en particulier).

Comme le montrent les différents exemples de réalisation ci-avant, à partir des positionnements longitudinal et transversal de l'huître, le perçage de son couvercle peut être réalisé par le dessus ou par le dessous. Les systèmes de positionnement peuvent être de type graphique (reproduit par impression, par rayon, par projection, etc...), de type mécanique ou de type gabarit à action directe ou indirecte. Il sera également envisageable de prévoir des combinaisons de ces différents systèmes de positionnement (graphique, mécanique, gabarit), l'un pour le positionnement longitudinal et l'autre pour le positionnement transversal de l'huître.

Il est aussi concevable, pour des opérateurs bien entraînés et ayant un bon coup d'oeil, de prévoir une machine équipée d'un seul système de positionnement, soit longitudinal, soit transversal, le positionnement complémentaire étant réalisé à l'estime.

D'autre part, après avoir réalisé le percement du couvercle, l'ouverture de l'huître pourra être réalisée autrement que par l'outil détaillé sur la figure 6. On pourra en effet utiliser tout moyen apte à sectionner le muscle après introduction dans l'orifice du couvercle, l'ouverture finale étant réalisée par une simple traction manuelle ou autre sur ledit couvercle.

La présente invention s'applique également à de nombreux autres coquillages qui obéissent aux mêmes règles, par exemple la coquille Saint-Jacques.

## Revendications

1. Procédé pour ouvrir les coquillages tels que les huîtres par exemple dont le couvercle est retenu par un muscle, lequel procédé comprend une opération de perçage pour réaliser un orifice dans le couvercle dudit coquillage, puis une opération de sectionnement du muscle par des moyens appropriés introduits par ledit orifice avant d'assurer l'enlèvement dudit couvercle par simple traction, **caractérisé en ce qu'**il consiste :
- à placer le coquillage sur un dispositif support muni de moyens graphiques ou mécaniques qui permettent de déterminer automatiquement la position au moins approximative du muscle dudit coquillage, en fonction de quelques points au moins des contours de celui-ci,
- à utiliser lesdits moyens graphiques ou mécaniques pour régler manuellement ou mécaniquement le positionnement correct dudit coquillage par rapport à un outil de perçage afin d'assurer le percement de son couvercle sur le muscle ou dans la zone proche du muscle, puis
- à effectuer l'opération de percement dudit couvercle sur ledit muscle ou dans la zone alentour proche de ce muscle.

2. Procédé selon la revendication 1, **caractérisé en ce que** l'opération de perçage de l'orifice dans le couvercle du coquillage est réalisée en plaçant ledit couvercle sur le dispositif de positionnement, puis en perçant ledit couvercle au travers de ce dispositif de positionnement.

3. Dispositif pour ouvrir les coquillages, genre huîtres par exemple, pour la mise en oeuvre du procédé selon l'une quelconque des revendications 1 ou 2, **caractérisé en ce qu'**il comprend :
- un outil (3, 57, 92, 121) de perçage du couvercle du coquillage (5),
- des moyens graphiques ou mécaniques (20 ; 31, 32, 40, 41 ; 70, 71, 80, 82; 97, 98, 104, 105; 124, 130) adaptés pour déterminer automatiquement la position au moins approximative du muscle dudit coquillage (5) en fonction de quelques points au moins des contours de celui-ci et qui permettent de régler le positionnement dudit coquillage (5) par rapport à l'outil de perçage, pour assurer le perçage de son couvercle sur le muscle ou dans la zone du muscle qui retient ledit couvercle, et
- des moyens qui, une fois introduits dans l'orifice aménagé dans le couvercle du coquillage (5), sont adaptés pour trancher le muscle qui retient le couvercle et éventuellement pour assurer une traction sur ledit couvercle en vue de son enlèvement.

4. Dispositif selon la revendication 3, **caractérisé en ce que** les moyens adaptés pour trancher le muscle du coquillage consistent en un outil (24) comprenant un manche (25) prolongé par un crochet (26) en forme générale de L, lequel crochet (26) est constitué d'une tige (27) qui s'étend dans le prolongement dudit manche (25), et d'un retour (28) à l'équerre ou sensiblement à l'équerre, muni de la partie tranchante.

5. Appareil de perçage pour le dispositif selon l'une quelconque des revendications 3 ou 4, **caractérisé en ce qu'**il comprend :
- un outil (3, 57, 92, 121) de perçage du couvercle du coquillage (5),
- un dispositif support dudit coquillage (5), muni de moyens graphiques ou mécaniques adaptés pour déterminer la position au moins approximative du muscle dudit coquillage, en fonction de quelques points au moins des contours de celui-ci et qui permettent le réglage manuel ou mécanique du positionnement dudit coquillage (5) par rapport audit outil de perçage (3, 57, 92, 121), pour assurer le perçage de son couvercle sur le muscle ou dans la zone du muscle qui retient ledit couvercle.

6. Appareil selon la revendication 5, **caractérisé en ce qu'**il comprend :
- un plan (6 ; 68 ; 76 ; 93 ;124, 125, 130, 131), de positionnement du coquillage (5),
- un outil de perçage en forme de forêt (3, 57, 92, 121) qui est associé à une motorisation (2, 63, 91, 120') et qui est disposé perpendiculairement audit plan de positionnement, ledit forêt et ledit plan de positionnement étant mobiles l'un par rapport à l'autre pour assurer le perçage du couvercle du coquillage et
- un moyen de positionnement graphique (20) ou mécanique (31, 32, 40, 41 ; 70, 71, 80, 82 ; 97, 98, 104, 105 ; 124, 130) du coquillage par rapport à l'outil de perçage (3, 57, 92, 121), dans des coordonnées rectangulaires XX'-YY' qui prennent en compte, d'une part la longueur AB du coquillage sur l'axe YY' pour déterminer un point d'origine O, sachant que pour une même espèce de coquillage, le rapport AO/AB est constant, et, d'autre part, la largeur CD du coquillage sur l'axe XX' passant par le point O, perpendiculaire à l'axe YY', pour déterminer la position du point M correspondant au muscle, sachant que pour une même espèce de coquillage, le rapport CM/CD est constant.

7. Appareil selon la revendication 6, **caractérisé en ce qu'**il comporte un forêt de perçage (57) et une motorisation (63) montés sur une potence (60) au-dessus du plan de positionnement du coquillage.

8. Appareil selon la revendication 6, **caractérisé en ce qu'**il comporte :
- un boîtier (1, 90, 120) renfermant la motorisation (2, 91, 120') d'entraînement du forêt (3, 92, 121), à partir du plan horizontal supérieur (4, 122) duquel s'étend en saillie ledit forêt de perçage,
- un plan (6 ; 93 ; 124, 125, 130, 131) de positionnement horizontal ou sensiblement horizontal sur lequel peut venir reposer le coquillage sur son couvercle, lequel plan de positionnement est muni d'un orifice (8 ; 96 ; 126, 134) de passage du forêt de perçage (3, 92, 121) et lequel plan de positionnement est disposé parallèlement audit plan horizontal supérieur du boîtier, séparé de ce dernier par un système de ressort (7 ; 94 ; 128, 132) pour permettre leur maintien écarté au repos, et pour permettre leur rapprochement en vue du perçage, par une pression manuelle, et
- un dispositif de positionnement graphique (20) ou mécanique (97, 98, 104, 105 ; 124, 130) qui prend en compte le positionnement du coquillage sur son couvercle.

9. Appareil selon la revendication 8, **caractérisé en ce que** le plan de positionnement (6 ; 93 ; 124, 125, 130, 131) du coquillage (5) est bordé par une jupe périphérique (10, 93', 133) entourant le boîtier (1, 90, 120) qui renferme la motorisation (2, 91, 120') du forêt de perçage (3, 92, 121).

10. Appareil selon l'une quelconque des revendications 8 ou 9, **caractérisé en ce que** le plan de positionnement comporte une structure de protection solidaire du boîtier, qui forme une sorte d'arceau de sécurité (14) au-dessus du forêt de perçage (3).

11. Appareil selon l'une quelconque des revendications 8 à 10, **caractérisé en ce qu'**il comporte un contacteur de sécurité (16) actionné par le plan de positionnement (6) du coquillage et adapté pour empêcher le fonctionnement de la motorisation (2) lorsque ledit plan de positionnement (6) est séparé du boîtier (1).

12. Appareil selon l'une quelconque des revendications 6 à 11, **caractérisé en ce qu'**il comporte un plan de positionnement (6) muni d'un graphique (20) de positionnement du coquillage (5).

13. Appareil selon la revendication 12, **caractérisé en ce qu'**il comporte un graphique de positionnement (20) muni de repères représentant les cotes AB et CD de plusieurs tailles d'une même espèce de coquillage, dans les rapports AO/AB et CM/CD connus pour cette même espèce de coquillage, le positionnement dudit coquillage étant manuel par extrapolation entre les repères du graphique.

14. Appareil selon l'une quelconque des revendications 6 à 11, **caractérisé en ce qu'**il comporte des moyens mécaniques pour assurer un positionnement automatique du coquillage par rapport à l'outil de perçage, lesquels moyens mécaniques sont constitués d'une première structure de mâchoires (31, 32 ; 70, 71, 80 ; 97, 98 ; 130) assurant le positionnement longitudinal AB du coquillage et d'une seconde structure de mâchoires (40, 41 ; 82 ; 104, 105 ; 124) assurant son positionnement transversal CD.

15. Appareil selon la revendication 14, **caractérisé en ce qu'**il comporte :
- un boîtier (120) renfermant la motorisation d'entraînement du forêt (121), à partir du plan horizontal supérieur (122) duquel s'étend en saillie ledit forêt de perçage (121), et
- deux structures de positionnement mécanique superposées, en forme de gabarits en Vé, disposés orthogonalement l'une par rapport à l'autre pour le positionnement longitudinal et transversal de l'huître (5) par rapport audit forêt de perçage (121),
le premier gabarit (124) étant solidaire d'un premier plan de réception (125) séparé du plan supérieur (122) du boîtier (120) par un premier système de ressort (128) et le second gabarit (130) étant lui-même solidaire d'un second plan de réception (131) séparé du premier (125) par un second système de ressort (132),
le second gabarit (130) étant mobile sur son plan de réception (131), guidé parallèlement à lui-même dans le sens de positionnement dudit premier gabarit (124), le plan de réception (131) dudit second gabarit (130) comportant une lumière (134) pour le passage dudit premier gabarit (124) et du forêt (121).

## Patentansprüche

1. Verfahren zum Öffnen von Muscheln, wie zum Beispiel Austern, deren Schale von einem Muskel gehalten wird, wobei das Verfahren einen Lochungsvorgang umfasst, um in der Schale der Muschel eine Öffnung herzustellen, gefolgt von einem Durchtrennvorgang des Muskels durch geeignete Mittel, die durch die Öffnung eingefügt werden, bevor das Abheben der Schale durch einfaches Ziehen gewährleistet ist, **dadurch gekennzeichnet, dass** es darin besteht,
- die Muschel auf eine Tragvorrichtung zu legen, die mit grafischen oder mechanischen Mitteln versehen ist, die es erlauben, automatisch zumindest die ungefähre Position des Muskels der Muschel in Abhängigkeit von zumindest einigen Punkten der Konturen der Muschel zu bestimmen,
- die grafischen oder mechanischen Mittel dazu zu verwenden, um manuell oder mechanisch die richtige Positionierung der Muschel in Bezug auf das Lochungswerkzeug einzustellen, um sicherzustellen, dass das Lochen ihrer Schale auf dem Muskel oder in der Zone in Nähe des Muskels erfolgt, und danach
- das Lochen der Schale auf dem Muskel oder in der Zone um und in der Nähe des Muskels durchzuführen.

2. Verfahren nach Anspruch 1, **dadurch gekennzeichnet, dass** der Lochungsvorgang für das Herstellen der Öffnung in der Schale der Muschel dadurch erfolgt, dass die Schale auf die Positioniervorrichtung gelegt und die Schale dann quer durch die Positioniervorrichtung hindurch durchlocht wird.

3. Vorrichtung zum Öffnen von Muscheln, zum Beispiel Austern, für die Durchführung des Verfahrens nach einem der Ansprüche 1 oder 2, **dadurch gekennzeichnet, dass** sie folgendes umfasst:
- ein Werkzeug (3, 57, 92, 121) zum Durchlochen der Schale der Muschel (5),
- grafische oder mechanische Mittel (20; 31, 32, 40, 41; 70, 71, 80, 82; 97, 98, 104, 105; 124, 130), die dazu geeignet sind, automatisch die zumindest ungefähre Position des Muskels der Muschel (5) in Abhängigkeit von zumindest einigen Punkten der Konturen der Muschel zu bestimmen, und die es erlauben, die Positionierung der Muschel (5) in Bezug auf das Lochungswerkzeug so einzustellen, dass das Durchlochen der Schale auf dem Muskel oder in der Zone des Muskels gewährleistet ist, der die Schale hält, und
- Mittel, die nach ihrem Einführen in die in der Schale der Muschel (5) geschaffene Öffnung dazu geeignet sind, den Muskel zu durchtrennen, der die Schale hält, und eventuell dazu, einen Zug an der Schale zu gewährleisten, um diese abzuheben.

4. Vorrichtung nach Anspruch 3, **dadurch gekennzeichnet, dass** die zum Durchtrennen des Muskels der Muschel geeigneten Mittel aus einem Werkzeug (24) mit einem Stiel (25) bestehen, der durch einen im Allgemeinen L-förmigen Haken (26) verlängert ist, wobei der Haken (26) aus einem Schaft (27) besteht, der sich in der Verlängerung des Stiels (25) erstreckt, und aus einem rücklaufenden Teil (28) im rechten Winkel oder im Wesentlichen im rechten Winkel, das mit dem schneidenden Teil versehen ist.

5. Lochungsgeröt für die Vorrichtung nach einem der Ansprüche 3 oder 4, **dadurch gekennzeichnet, dass** es folgendes umfasst:
- ein Werkzeug (3, 57, 92, 121) zum Durchlochen der Schale der Muschel (5),
- eine Tragvorrichtung für die Muschel (5), versehen mit grafischen oder mechanischen Mitteln, die dazu geeignet sind, die zumindest ungefähre Position des Muskels der Muschel in Abhängigkeit von zumindest einigen Punkten der Konturen der Muschel zu bestimmen, und die ein manuelles oder mechanisches Einstellen der Positionierung der Muschel (5) in Bezug auf das Lochungswerkzeug (3, 57, 92, 121) erlauben, um das Durchlochen ihrer Schale auf dem Muskel oder in der Zone des Muskels, der die Schale hält, sicherzustellen.

6. Gerät nach Anspruch 5, **dadurch gekennzeichnet, dass** es folgendes umfasst:
- eine Fläche(6; 68; 76; 93; 124; 125, 130, 131) zum Positionieren der Muschel (5),
- ein Lochungswerkzeug in Form eines Bohrers (3, 57, 92, 121), das mit einem Antrieb (2, 63, 91, 120') verbunden ist und das im rechten Winkel zur Positionierebene angeordnet ist, wobei der Bohrer und die Positionierfläche in Bezug zueinander beweglich sind, um das Durchbohren der Schale der Muschel sicherzustellen, und
- ein grafisches (20) oder mechanisches Mittel (31, 32, 40, 41; 70, 71, 80, 82; 97, 98, 104, 105; 124, 130) zum Positionieren der Muschel in Bezug auf das Lochungswerkzeug (3, 57, 92, 121), in rechteckigen Koordinaten XX'-YY', die einerseits die Länge AB der Muschel auf der Achse YY' berücksichtigen, um einen Ausgangspunkt O zu bestimmen, wobei berücksichtigt wird, dass bei jeder Muschelart das Verhältnis AO/AB konstant ist, und, andererseits, die Breite CD der Muschel auf der Achse XX' durch den Punkt O, im rechten Winkel zur Achse YY', berücksichtigen, um die Position des Punktes M, die dem Muskel entspricht, zu bestimmen, wobei berücksichtigt wird, dass bei jeder Muschelart das Verhältnis CM/CD konstant ist.

7. Gerät nach Anspruch 6, **dadurch gekennzeichnet, dass** es einen Bohrer (57) und einen Antrieb (63) umfasst, die auf einen Ausleger (60) über der Positionierfläche der Muschel montiert sind.

8. Gerät nach Anspruch 6, **dadurch gekennzeichnet, dass** es folgendes umfasst:
- ein Gehäuse (1, 90, 120), das den Antrieb (2, 91, 120') zum Antreiben des Bohrers (3, 92, 121) aufweist, ausgehend von der oberen horizontalen Fläche (4, 122), von der sich der Bohrer vorspringend erstreckt,
- eine Fläche (6; 93; 124, 125, 130, 131) zum horizontalen oder im Wesentlichen horizontalen Positionieren, auf der die Muschel mit ihrer Schale aufliegt, wobei die Positionierfläche über eine Öffnung (8; 96; 126, 134) für das Durchreichen des Bohrers (3, 92, 121) verfügt und wobei die Positionierfläche parallel zur oberen horizontalen Fläche des Gehäuses angeordnet und von diesem durch ein Federsystem (7; 94; 128, 132) getrennt ist, um das Auseinanderhalten-im ruhenden Zustand zu erlauben und um ihr Annähern zum Durchlochen durch einen manuellen Druck zu erlauben, und
- eine grafische (20) oder mechanische (97, 98, 104, 105; 124, 130) Vorrichtung zum Positionieren, die berücksichtigt, dass die Muschel auf ihrer Schale liegt.

9. Gerät nach Anspruch 8, **dadurch gekennzeichnet, dass** die Positionierfläche (6; 93; 124, 125, 130, 131) der Muschel (5) von einer peripheren Schürze (10, 93', 133) umrandet ist, die das Gehäuse (1, 90, 120) umgibt und den Antrieb (2, 91, 120') des Bohrers (3, 92, 121) umfasst.

10. Gerät nach einem beliebigen der Ansprüche 8 oder 9, **dadurch gekennzeichnet, dass** die Positionierfläche eine Schutzstruktur aufweist, die fest mit dem Gehäuse verbunden ist und eine Art Sicherheitsbügel (14) über dem Bohrer (3) bildet.

11. Gerät nach einem beliebigen der Ansprüche 8 bis 10, **dadurch gekennzeichnet, dass** es einen Sicherheitsschalter (16) aufweist, der von der Positionierfläche (6) der Muschel betätigt wird und dazu geeignet ist, den Betrieb des Antriebs (2) zu verhindern, solange die Positionierfläche (6) vom Gehäuse (1) getrennt ist.

12. Gerät nach einem beliebigen der Ansprüche 6 bis 11, **dadurch gekennzeichnet, dass** es eine Positionierfläche (6) mit einer Grafik (20) zum Positionieren der Muschel (5) umfasst.

13. Gerät nach Anspruch 12, **dadurch gekennzeichnet, dass** es eine Positioniergrafik (20) mit Kennzeichnungen der Maße AB und CD in mehreren Größen für eine Muschelart mit den für diese Muschelart bekannten Verhältnissen AO/AB und CM/CD aufweist, wobei das Positionieren der Muschel manuell durch Extrapolation zwischen den Kennzeichnungen der Grafik erfolgt.

14. Gerät nach einem beliebigen der Ansprüche 6 bis 11, **dadurch gekennzeichnet, dass** es mechanische Mittel aufweist, um ein automatisches Positionieren der Muschel in Bezug auf das Lochungswerkzeug zu gewährleisten, wobei die mechanischen Mittel aus einem ersten Backenaufbau (31, 32; 70, 71, 80; 97, 98; 130) bestehen, der das Längspositionieren AB der Muschel gewährleistet, sowie aus einem zweiten Backenaufbau (40, 41; 82; 104, 105; 124), der das Querpositionieren CD gewährleistet.

15. Gerät nach Anspruch 14, **dadurch gekennzeichnet, dass** es folgendes aufweist:
- ein Gehäuse (120), das den Antriebsmotor des Bohrers (121), ausgehend von der oberen horizontalen Fläche (122), ausweist, aus der der Bohrer (121) vorspringend herausragt, und
- zwei mechanische, über einander angeordnete Positionierbauteile in Form von V-Lehren, die orthogonal zueinander zum Längs und Querpositionieren der Auster (5) in Bezug auf den Bohrer (121) angeordnet sind,
wobei die erste Lehre (124) fest mit einer ersten Aufnahmefläche (125) verbunden ist, die von der oberen Fläche (122) des Gehäuses (120) durch ein erstes Federsystem (128) getrennt ist, während die zweite Lehre (130) selbst fesf mit einer zweiten Aufnahmefläche (131) verbunden ist, die von der ersten (125) durch ein zweites Federsystem (132) getrennt ist,
wobei die zweite Lehre (130) auf ihrer Aufnahmefläche (131) beweglich angeordnet ist und parallel zu ihr selbst in die Positionierrichtung der ersten Lehre (124) führbar ist, wobei die Aufnahmefläche (131) der zweiten Lehre (130) ein Langloch (134) für die Passage der ersten Lehre (124) und des Bohrers (121) aufweist.

## Claims

1. Method for opening shellfish such as oysters whose lid is retained by a muscle, said method comprising a piercing step to make a hole in the lid of the shellfish and a cutting step of the muscle with suitable means introduced in the hole before removing the lid by means of a simple effort of traction **characterised in that** it consists in :
- placing the shellfish on a support device provided with graphic or mechanical means allowing to determine automatically the position at least approximately of the said shellfish muscle according to some points at least of said latter,
- using said graphic or mechanical means to adjust manually or mechanically the suitable position of said shellfish relative to a piercing tool in order to make the piercing of its lid on the muscle or in an area near the muscle, then
- piercing said lid on said muscle or in the vicinity of said muscle.

2. Method according to claim 1 **characterised in that** the operation for piercing the hole in the lid of the shellfish is performed by placing the said lid on the positioning device and by then piercing the said lid through the positioning device.

3. Device for opening shellfish such as oysters for implementing the method of any one of claims 1 or 2, **characterised in that** it comprises :
- a tool (3, 57, 92, 121) for piercing the lid of the shellfish (5),
- graphic or mechanical means (20, 31, 32, 40, 41, 70, 71, 80, 82, 97, 98, 104, 105, 124, 130) provided to determine automatically the position at least approximately of said shellfish (5) according to some points at least of said latter and which allow to control the positioning of said shellfish (5) relative to the piercing tool in order to make the piercing of its lid on the muscle or in an area of the muscle retaining the said lid, and
- means which, once inserted into the hole drilled in the lid of the shellfish (5) are capable of cutting the muscle retaining the said lid and possibly for also providing traction on the said lid in order to remove it.

4. Device according to claim 3 **characterised in that** the means for cutting the shellfish muscle consist of a tool (24) comprising a handle (25) into which is fitted and L-shaped hook (26), said hook (26) comprising a rod (27) that is in line with the handle (25) and an extension (28) at its end that is at an angle of more or less at 90°, bearing the cutting part.

5. Piercing apparatus for the device according to any one of claims 3 or 4, **characterised in that** it comprises :
- a tool (3, 57, 92, 121) for piercing the lid of the shellfish (5),
- a support device of said shellfish (5) provided with graphic or mechanical means for determining the position at least approximative of the said shellfish muscle according to some points at least of said latter and which allow a manual or mechanical controlling of the position of said shellfish (5) relative to the piercing tool (3, 57, 92, 121) in order to make the piercing of its lid on the muscle or in an area of the muscle retaining the said lid.

6. Apparatus according to claim 5 **characterised in that** it comprises :
- a positioning table (6; 68; 76; 93; 124, 125, 130, 131) for the shellfish (5),
- a piercing tool in the form of a drill (3, 57, 92, 121) combined with a motor unit (2, 63, 91, 120') and disposed perpendicularly to the positioning table, the said drill and the said positioning table being movable relative to one another to pierce the lid of the shellfish, and
- graphic (20) or mechanical means (31, 32, 40, 41; 70, 71, 80, 82; 97, 98, 104, 105; 124, 130) for positioning the shellfish relative to the piercing tool (3, 57, 92, 121) within rectangular co-ordinates XX'-YY' that take into consideration firstly the length AB of the shellfish along axis YY' to determine the origin of the co-ordinates O, given that for a same species of shellfish the ratio AO/AB is constant, and secondly the width CD of the shellfish along axis XX' passing through point O and perpendicular to axis YY' to determine the position of point M, the muscle, given that for a same species of shellfish the ratio CM/CD is constant.

7. Apparatus according to claim 6 **characterised in that** it comprises a piercing drill (57) and a motor unit (63) mounted on a bracket (60) above the shellfish positioning table.

8. Apparatus according to claim 6 **characterised in that** it comprises :
- a casing (1, 90, 120) housing the motor unit (2, 91, 120') that drives the drill (3, 92, 121), through the upper horizontal surface of which (4, 122) the drill projects,
- a substantially or less horizontal positioning table (6; 93; 124, 125, 130, 131) on which the shellfish can be placed on its lid, the said positioning table being provided with an orifice (8; 96; 126, 134) through which the piercing drill (3, 92, 121) can pass, the said positioning table being disposed parallel to the said upper horizontal surface of the casing and separated from it by a spring system (7; 94; 128, 132) to allow that the two surfaces are separated in the rest position but can be brought together by manual pressure in order to perform the piercing operation, and
- a graphic (20) or mechanical positioning device (97, 98, 104, 105; 124, 130) that takes the positioning of the shellfish on its lid into consideration.

9. Apparatus according to claim 8 **characterised in that** the positioning table (6; 93; 124, 125, 130, 131) for the shellfish (5) is surrounded by a peripheral skirt (10, 93', 133) surrounding the casing (1, 90, 120) housing the motor unit (2, 91, 120') that drives the piercing drill (3, 92, 121).

10. Apparatus according to any one of claims 8 or 9 **characterised in that** the positioning table comprises a protective structure integral with the casing forming a type of safety screen (14) over the piercing drill (3).

11. Apparatus according to any one of claims 8 to 10 **characterised in that** it comprises a safety switch (16) actuated by the shellfish positioning table (6) and capable of cutting the motor unit (2) when the positioning table (6) is separated from the casing (1).

12. Apparatus according to any one of claims 6 to 11 **characterised in that** it comprises a positioning table (6) provided with a graphic (20) for positioning the shellfish (5).

13. Apparatus according to claim 12 **characterised in that** it comprises a positioning graphic (20) provided with reference points showing dimensions AB and CD for several sizes of the same variety of shellfish within the known ratios AO/AB and CM/CD for the variety in question, the shellfish being manually positioned between the reference points of the graphic.

14. Apparatus according to any one of claims 6 to 11 **characterised. in that** it comprises mechanical means for automatically positioning a shellfish relative to the piercing tool, said mechanical means consisting of a first jaw structure (31, 32; 70, 71, 80; 97, 98; 130) for ensuring the longitudinal positioning AB of the shellfish, and a second jaw structure (40, 41; 82; 104, 105; 124) for ensuring the lateral positioning CD of the shellfish.

15. Apparatus according to claim 14 **characterised in that** it comprises :
- a casing (120) housing the motor unit for powering the drill (121), through the upper horizontal surface of which the drill (121) projects, and
- two superposed mechanical positioning structures in the form of V-shaped templates disposed orthogonally relative to one another to ensure the longitudinal and transversal positioning of the shellfish (5) relative to the said piercing drill (121), the first template (124) being integral with a first reception plane (125) separated from the upper surface (122) of the casing (120) by means of a first spring system (128) and the second template (130) being itself integral with a second reception plane (131) separated from the first (125) by a second spring system (132), the second template (130) being capable of moving on its reception plane (131) and guided parallel to itself in the positioning direction of the said first template (124), the reception plane (131) of the said second template (130) comprising an aperture (134) through which the first template (124) and the drill (121) can travel.
